# FASCICULE DE BREVET EUROPEEN

(11) **EP 3 953 763 B1**
(45) Date de publication et mention de la délivrance du brevet: **18.10.2023**
(21) Numéro de dépôt: 20715064.0
(22) Date de dépôt: 31.03.2020
(51) Int. Cl.: G03B 17/02

(54) **MODULE CAMÉRA CONFIGURÉ POUR COOPÉRER AVEC UN SUPPORT DE FIXATION**
KAMERAMODUL MIT KONFIGURATION ZUR INTERAKTION MIT EINEM BEFESTIGUNGSHALTER
CAMERA MODULE CONFIGURED TO INTERACT WITH A FASTENING HOLDER

(30) Priorité: 12.04.2019 FR 1903941
(43) Date de publication de la demande: 16.02.2022
(73) Titulaire: Safety Tech, 69530 Brignais (FR)
(72) Inventeur: BRUNETON, Denis, 69126 BRINDAS (FR); THOLIN, Romain, 69260 CHARBONNIERES-LES-BAINS (FR); DE BUSSY, Thibault, 69006 LYON (FR)
(74) Mandataire: Germain Maureau
(86) Numéro de dépôt international: PCT/EP2020/059120
(87) Numéro de publication internationale: WO 2020/207860

(56) Documents cités:
- US-A1- 2017 036 647
- US-A1- 2017 036 650
- US-A1- 2019 039 531

## Description

### Domaine de l'invention

La présente invention concerne un module caméra configuré pour coopérer avec un support de fixation et également un système de surveillance pour véhicule comprenant au moins un module caméra.

### Art antérieur

Pour les véhicules, en particulier pour les véhicules routiers, il est connu d'utiliser des modules caméras pour que le conducteur surveille des zones qui lui sont masquées, voir US 2017036647, US2017036650 et US2019039531.

Notamment, plusieurs modules caméras peuvent être utilisés pour permettre au conducteur de voir l'arrière du véhicule, la vue bloquée par les montants latéraux de l'habitacle et/ou pour remplacer les rétroviseurs.

Le conducteur peut ainsi surveiller ces zones sur un écran interne du véhicule. Ce système de modules caméras donne ainsi satisfaction en ce qu'il améliore le confort de conduite et la sécurité.

Toutefois, l'intégration d'un ou plusieurs modules caméras dans un véhicule implique un certain nombre de raccordements mécaniques, électriques et/ou électroniques.

Dans ce contexte, il peut s'avérer fastidieux de changer un module caméra défectueux.

En particulier, selon l'emplacement du module caméra défectueux, les raccordements mécaniques, électriques et/ou électroniques peuvent être réalisés de manières différentes et/ou avec des pièces différentes.

Disposer des pièces nécessaires et/ou des connaissances pour le remplacement de ces pièces peut s'avérer problématique.

La présente invention vise à résoudre tout ou partie des inconvénients mentionnés ci-dessus.

### Exposé de l'invention

A cet effet, la présente invention concerne un module caméra configuré pour coopérer avec un support de fixation, le module caméra comprenant un appareil de prise de vues pourvu d'un objectif et d'une prise de raccordement pour la transmission d'images ; un boitier de protection pourvu d'une paroi de protection disposée en regard de l'objectif, et d'une paroi arrière opposée à la paroi de protection et s'étendant sensiblement selon un plan arrière ; un agencement de raccordement configuré pour coopérer avec le support de fixation en une position montée, l'agencement de raccordement comprenant un dispositif de blocage du support de fixation en position montée et un profilé de guidage pour le branchement d'une prise externe sur la prise de raccordement, le dispositif de blocage et le profilé de guidage s'étendant au-delà du plan arrière transversalement au plan arrière et en un sens opposé à la paroi de protection, un système de dégivrage pourvu d'une partie chauffante configurée pour chauffer la paroi de protection et d'une prise d'alimentation ménagée dans ou rapportée sur le boitier de protection de manière à pouvoir coopérer avec une prise d'alimentation complémentaire selon une direction de branchement transversale au plan arrière.

Le profilé de guidage permet un branchement aisé du module caméra à la prise externe car le profilé de guidage sort du gabarit défini par le boitier de protection. De même, la proximité du dispositif de blocage permet une fixation facile du module caméra sur le support de fixation.

Il est ainsi très simple d'installer le module caméra. Concernant la maintenance, il est également aisé de démonter le module caméra pour le remplacer par un autre.

Selon un aspect de l'invention, le profilé de guidage présente une surface profilée interne orientée vers la prise de raccordement. De préférence, la surface profilée interne présente des rainures et/ou nervures de coopération avec la prise externe.

Cette disposition permet au profilé de guidage de protéger la prise de raccordement et également de faciliter le branchement en agissant en tant que guide pour la prise externe.

Selon un aspect de l'invention, la paroi de protection est transparente. Ainsi, l'objectif peut obtenir une image nette tout en étant protégé.

Selon un aspect de l'invention, la prise de raccordement est agencée pour coopérer avec la prise externe selon une direction d'insertion parallèle à ou confondue avec une direction d'extension du profilé de guidage.

Cette disposition facilite la connexion de la prise de raccordement à la prise externe puisque la translation relative de ces pièces est guidée par complémentarité de forme.

Selon un aspect de l'invention, le profilé de guidage entoure la prise de raccordement transversalement à la direction d'extension du profilé de guidage. De préférence, le profilé de guidage présente un contour fermé transversalement à la direction d'extension du profilé de guidage sur une fraction longitudinale du profilé de guidage.

Selon un aspect de l'invention, le profilé de guidage s'étend au-delà de la prise de raccordement selon la direction d'extension du profilé de guidage et le sens opposé à la paroi de protection.

Cette disposition permet de protéger la prise de raccordement de l'environnement extérieur.

Selon un aspect de l'invention, la fraction longitudinale du profilé présentant un contour fermé entoure et s'étend au-delà de la prise de raccordement selon la direction d'extension.

Selon un aspect de l'invention, le profilé de guidage comprend une rampe de guidage configurée pour coopérer avec la prise externe selon la direction d'insertion.

Cette disposition améliore encore la facilité de connexion de la prise de branchement.

Selon un aspect de l'invention, la rampe de guidage présente un profil en U. De préférence, le profil en U présente un creux orienté vers la prise de raccordement. En particulier, le profil en U comprend deux branches sensiblement parallèles.

Selon un aspect de l'invention, la rampe de guidage comprend en outre deux extrémités liées chacune à une branche correspondante et étant évasée et dans la continuité du reste du profilé de guidage.

Le raccordement de l'appareil de prise de vues et le système de dégivrage sont adaptés pour être connectés selon des axes sensiblement parallèle. Cette disposition facilite ainsi la mise en place du module caméra sur le support de fixation.

Selon un aspect de l'invention, la prise d'alimentation complémentaire est configurée pour coopérer avec la prise d'alimentation par translation selon la direction de branchement en se rapprochant de la paroi de protection.

Selon un aspect de l'invention, la direction de branchement est sensiblement parallèle à la direction d'insertion.

Selon un aspect de l'invention, la partie chauffante comprend une résistance électrique. De préférence, la partie chauffante s'étend sensiblement parallèlement à la paroi de protection. En particulier, la partie chauffante présente une ouverture centrale s'étendant en regard de l'objectif transversalement à la paroi de protection.

Selon un aspect de l'invention, le module caméra comprend en outre un système de nettoyage pourvu d'un tuyau d'alimentation et d'un dispositif de déviation de jet de nettoyage configuré pour dévier un jet de nettoyage selon une direction oblique par rapport à ou sensiblement parallèle à la paroi de protection de manière à nettoyer une portion de surface externe de la paroi de protection en regard de l'objectif.

Selon un aspect de l'invention, le jet de nettoyage est un jet de gaz et/ou de liquide et en particulier d'air et/ou d'eau. De préférence, le tuyau d'alimentation est agencé pour coopérer avec un raccord d'une conduite d'air comprimé et/ou d'eau sous pression.

Cette disposition permet d'utiliser le même module caméra avec soit un gaz comme de l'air soit un fluide comme de l'eau. Il est donc possible de s'adapter aux conditions extérieures, l'air étant préférable en cas de températures inférieures à 0°C.

Selon un aspect de l'invention, le boitier de protection présente une ouverture de passage pour le tuyau d'alimentation transversalement au plan arrière et selon une direction de connexion de nettoyage transversale au plan arrière.

Il apparait donc que le raccordement du système de nettoyage est réalisé parallèlement à ceux du système de dévirage et de l'appareil de prise de vues. Cette disposition facilite ainsi la mise en place du module caméra sur le support de fixation.

De préférence, le tuyau d'alimentation s'étend en dehors du boitier de protection en direction et/ou au-delà du plan arrière.

Selon un aspect de l'invention, le dispositif de déviation de jet de nettoyage comprend un élément de coopération pour une extrémité du tuyau d'alimentation.

En particulier, la direction de connexion de nettoyage est sensiblement parallèle à la direction de branchement et/ou la direction d'insertion.

Selon un aspect de l'invention, le dispositif de déviation de jet de nettoyage est configuré pour dévier le jet de nettoyage selon un angle sensiblement droit, de préférence compris entre 80° et 100° et en particulier de 90°.

Selon un aspect de l'invention, le dispositif de blocage comprend trois éléments de fixation amovible présentant chacun une surface de butée configurée pour coopérer avec le support de fixation, les surfaces de butée s'étendant selon un même plan dit plan de fixation amovible.

Le fait de disposer de trois éléments de fixation amovible permet un bon maintien en position du support de fixation car le support de fixation ne peut pas pivoter autour d'un axe défini par deux éléments de fixation amovible.

Le plan amovible permet d'utiliser un support de fixation plan comme une tôle, ce qui facilite la conception du support de fixation. Il est également aisé de prévoir un support de fixation définissant un angle de vue de l'objectif.

Selon un aspect de l'invention, le plan de fixation amovible est sensiblement parallèle au plan arrière.

De préférence, les éléments de fixation amovible sont non-alignés longitudinalement au plan arrière. En particulier, les éléments de fixation amovible sont disposés autour du profilé de guidage. En d'autres termes, au moins un segment reliant deux éléments de fixation amovible passe par le profilé de guidage.

Selon un aspect de l'invention, chaque surface de butée est ménagée sur une même surface dite surface de support de fixation s'étendant selon le plan de fixation amovible.

Selon une autre possibilité, chaque élément de fixation amovible comprend un plot s'étendant transversalement au plan arrière, chaque plot présentant à une extrémité la surface de butée correspondante.

Cette disposition permet de définir le plan de fixation amovible en utilisant des éléments constitutifs simples : les trois plots.

Selon un aspect de l'invention, chaque élément de fixation amovible comprend une partie de serrage apte à maintenir la coopération entre la surface de butée correspondante et le support de fixation.

Selon un aspect de l'invention, chaque partie de serrage est une vis apte à coopérer avec un filetage ménagé dans la surface de support de fixation ou dans le plot correspondant.

Selon un aspect de l'invention, le module caméra comprend en outre un dispositif d'étanchéité configuré pour coopérer avec le boitier de protection et/ou l'objectif de sorte à délimiter une zone étanche dans laquelle est compris au moins une partie de l'objectif, le dispositif d'étanchéité comprenant deux joints à contours fermés sensiblement parallèles et deux montants de liaison configurés pour définir une distance déterminée entre les deux joints.

Cette disposition permet de limiter le nombre de pièces puisque les deux joints sont reliés par les deux montants.

Selon un aspect de l'invention, les deux joints comprennent un premier joint configuré pour coopérer avec la paroi de protection et un deuxième joint configuré pour coopérer avec un épaulement de l'objectif.

Selon un aspect de l'invention, le boitier de protection comprend une partie avant agencée pour coopérer avec la paroi de protection et dans laquelle est ménagée le dispositif de déviation de jet de nettoyage.

De préférence, le premier joint est agencé pour coopérer avec la partie intermédiaire de calage et la paroi de protection de sorte à étanchéifier un contour de contact interne entre la partie intermédiaire de calage et la paroi de protection.

Selon un aspect de l'invention, le module caméra comprend une partie intermédiaire de calage agencée pour coopérer avec des deux joints du dispositif d'étanchéité et comprenant une paroi intermédiaire avec deux logements configurés pour recevoir les deux montants de liaison.

La pièce intermédiaire de calage en combinaison avec le dispositif d'étanchéité permet de définir une zone étanche de volume réduit par rapport au volume global du boitier de protection.

Cette disposition permet ainsi de limiter la puissance du système de dégivrage.

Selon un aspect de l'invention, la partie intermédiaire de calage est agencée pour coopérer avec la partie avant par complémentarité de forme, la paroi intermédiaire s'étendant dans la partie avant de sorte à maintenir le premier joint en position contre la paroi de protection.

Selon un aspect de l'invention, la prise d'alimentation et/ou l'ouverture de passage sont ménagées dans un épaulement externe du boitier de protection. De préférence, l'épaulement externe est ménagé dans la partie intermédiaire de calage. En particulier, l'épaulement externe est disposé entre la paroi de protection et la paroi arrière transversalement au plan arrière.

Selon un aspect de l'invention, le boitier de protection comprend une partie arrière comprenant la paroi arrière. De préférence, le boitier de coopération comprend un ensemble de maintien de la coopération entre la partie avant, la partie intermédiaire et la partie arrière. En particulier l'ensemble de maintien comprend au moins une vis agencée pour coopérer avec un filetage managé dans la partie avant, la partie arrière et/ou la partie intermédiaire.

La présente invention concerne également un système de surveillance pour véhicule comprenant au moins un module caméra tel que décrit ci-avant et le support de fixation configuré pour coopérer avec l'au moins un module caméra.

Selon un aspect de l'invention, le support de fixation comprend une ouverture traversante configurée pour le passage du profilé de guidage en position montée.

Selon un aspect de l'invention, le système de surveillance comprend en outre un dispositif de fixation à un véhicule comme un véhicule routier tel qu'un dispositif de fixation par vissage.

Selon un aspect de l'invention, le système de surveillance comprend un coffret de protection dans lequel est ménagée au moins une ouverture correspondant à l'au moins un module caméra de sorte à ce que l'objectif de l'au moins un module caméra soit en regard de l'ouverture.

Selon un aspect de l'invention, le système de surveillance comprend une pluralité de modules caméras et au moins un support de fixation apte à coopérer avec la pluralité de modules caméras. De préférence, chaque objectif de la pluralité de modules caméras présente un axe de vision propre distinct des axes de vision des autres modules caméras.

La présente invention concerne également un véhicule routier comprenant un système de surveillance avec un module caméra configuré pour filmer un angle de vue couvrant une partie cachée par un montant latéral avant du véhicule du point de vue d'un conducteur et au moins un module caméra configuré pour filmer un angle de vue arrière correspondant à un angle de vue d'un rétroviseur latéral.

Les différents aspects définis ci-dessus non incompatibles peuvent être combinés.

### Brève description des figures

L'invention sera mieux comprise à l'aide de la description détaillée qui est exposée ci-dessous en regard des dessins annexés.
[Fig. 1] est une vue avant en perspective d'un module caméra.
[Fig. 2] est une vue arrière en perspective du module caméra.
[Fig. 3] est une vue éclatée du module caméra.
[Fig. 4] est une vue en coupe du module caméra.
[Fig. 5] est une vue en perspective du module caméra et d'un support de fixation.
[Fig. 6] est une vue en perspective d'un système de surveillance comprenant trois modules caméras.

### Description en référence aux figures

Dans la description détaillée qui va suivre des figures définies ci-dessus, les mêmes éléments ou les éléments remplissant des fonctions identiques pourront conserver les mêmes références de manière à simplifier la compréhension de l'invention.

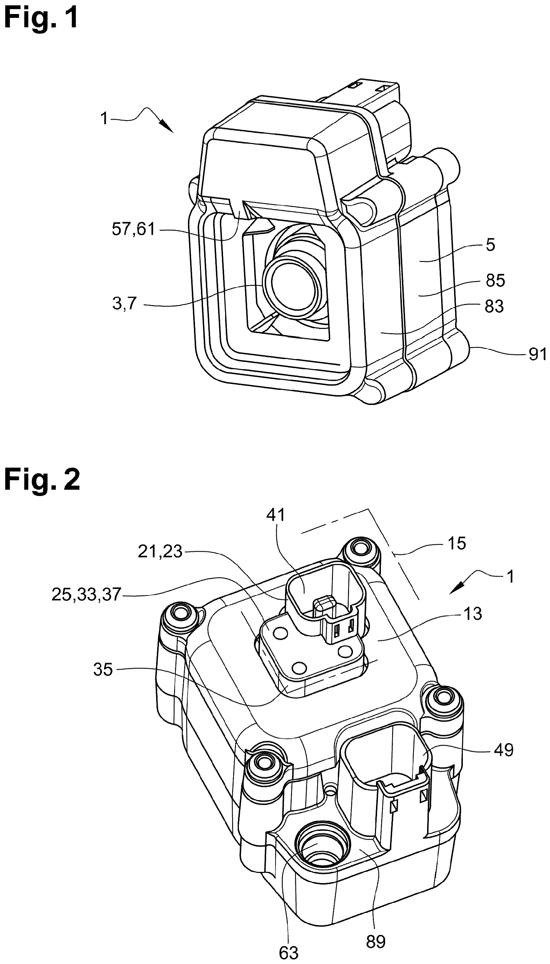

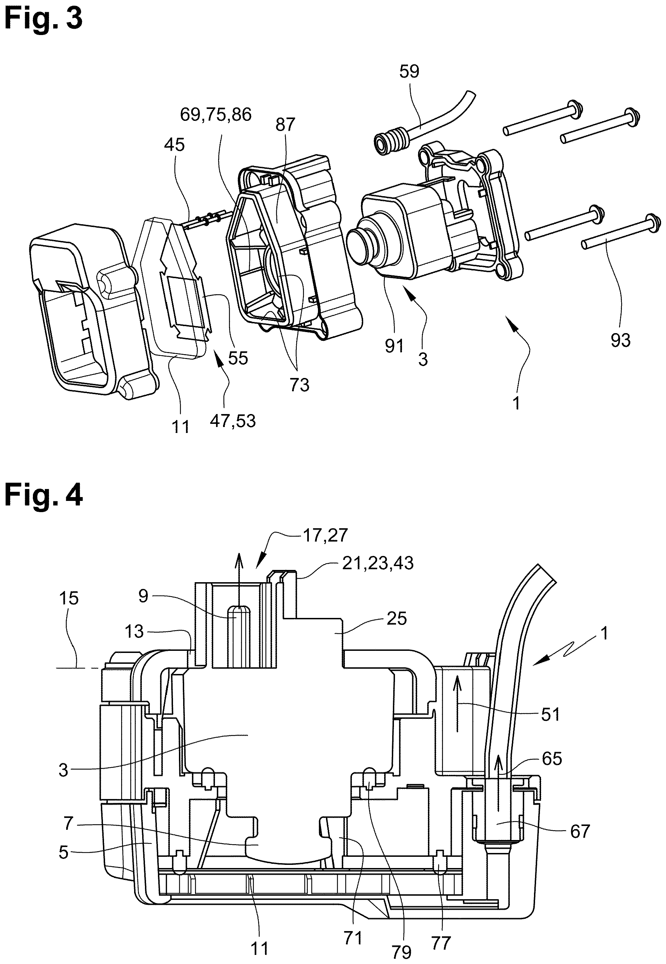

Comme illustré aux figures 1 à 4, un module caméra 1 comprend un appareil de prise de vues 3 et un boitier de protection 5. L'appareil de prise de vues 3 comprend un objectif 7 et une prise de raccordement 9 destinée à la transmission d'images.

Le boitier de protection 5 comprend une paroi de protection 11 qui est transparente et en regard de l'objectif 7. Le boitier de protection 5 comprend une paroi arrière 13 opposée à la paroi de protection 11 et s'étendant selon un plan arrière 15.

La prise de raccordement 9 s'étend selon une direction d'insertion 17 correspondant à la direction suivie par une prise externe agencée pour coopérer avec la prise de raccordement 9.

Le module caméra 1 comprend un agencement de raccordement 21 pourvu d'un profilé de guidage 23 et d'un dispositif de blocage 25 pour la prise externe.

Le profilé de guidage 23 s'étend selon une direction d'extension 27 qui est confondue avec la direction d'insertion 17.

Le profilé de guidage 23 et le dispositif de blocage 25 s'étendent également au-delà du plan arrière 15 transversalement au plan arrière 15 et en un sens opposé à la paroi de protection 11.

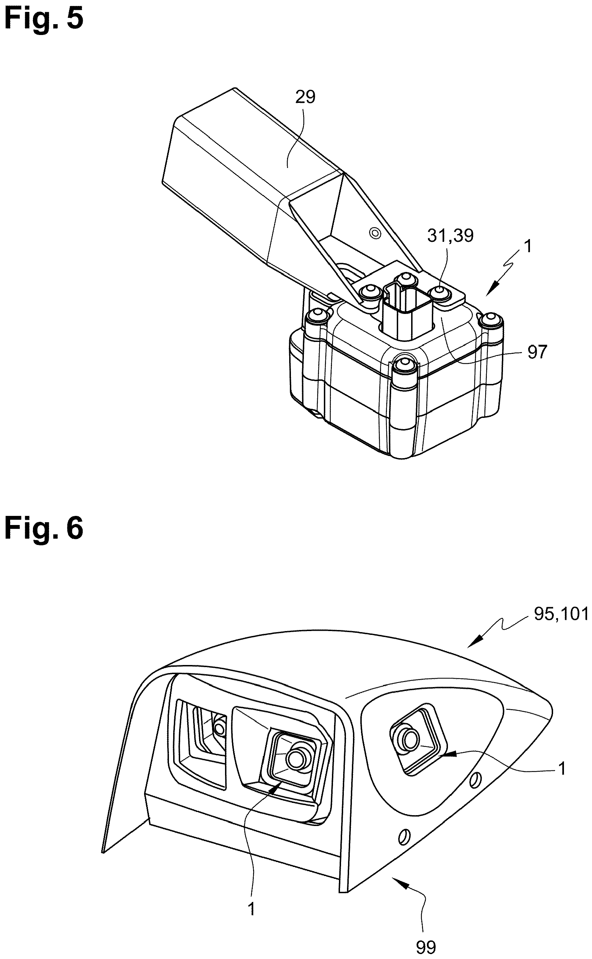

Comme illustré à la figure 5, le dispositif de blocage 25 est agencé pour maintenir en une position montée un support de fixation 29. Le dispositif de blocage 25 comprend trois éléments de fixation amovible 31 non-alignés longitudinalement au plan arrière 15.

Les trois éléments de fixation amovible 31 sont disposés autour du profilé de guidage 23, en particulier au moins un segment reliant deux des éléments de fixation amovible 31 passe par le profilé de guidage 23.

Chaque élément de fixation amovible 31 présente une surface de butée 33 correspondante. Les trois surfaces de butée 33 s'étendent selon un plan de fixation amovible 35 sensiblement parallèle au plan arrière 15.

Chaque surface de butée 33 est ménagée sur une même surface dite surface de support de fixation 37 s'étendant selon le plan de fixation amovible 35. Chaque élément de fixation amovible 31 comprend une partie de serrage 39 telle qu'une vis configurée pour coopérer avec un filetage ménagé dans la surface de support de fixation 37.

Le profilé de guidage 23 entoure la prise de raccordement 9 transversalement à la direction d'extension 17 selon un contour fermé. Le profilé de guidage 23 s'étend plus loin que la prise de raccordement 9 selon la direction d'insertion 17 et dans un sens opposé à la paroi de protection 11.

Le profilé de guidage 23 présente une surface profilée interne 41 orientée vers la prise de raccordement 9. La surface profilée interne 41 présente des rainures et/ou nervures de coopération avec la prise externe.

Le profilé de guidage 23 comprend une rampe de guidage 43 configurée pour coopérer avec la prise externe selon la direction d'insertion 17. La rampe de guidage 43 présente un profil en U avec un creux orienté vers la prise de raccordement 9, le profil en U comprenant deux branches sensiblement parallèles.

La rampe de guidage 43 comprend en outre deux extrémités liées chacune à une branche correspondante et étant évasée et dans la continuité du reste du profilé de guidage 23.

Le module caméra 1 comprend en outre un système de dégivrage 45 pourvu d'une partie chauffante 47 configurée pour chauffer la paroi de protection 11 et d'une prise d'alimentation 49 ménagée dans ou rapportée sur le boitier de protection 5 de manière à pouvoir coopérer avec une prise d'alimentation complémentaire selon une direction de branchement 51 transversale au plan arrière 15.

La prise d'alimentation complémentaire est configurée pour coopérer avec la prise d'alimentation 49 pour translation selon la direction de branchement 51 en se rapprochant de la paroi de protection 11.

La direction de branchement 51 est sensiblement parallèle à la direction d'insertion 17.

La partie chauffante 47 comprend une résistance électrique 53 et s'étend sensiblement parallèlement à la paroi de protection 11. La partie chauffante 47 présente une ouverture centrale 55 s'étendant en regard de l'objectif 7 transversalement à la paroi de protection 11.

Le module caméra 1 comprend en outre un système de nettoyage 57 pourvu d'un tuyau d'alimentation 59 et d'un dispositif de déviation de jet de nettoyage 61 configuré pour dévier un jet de nettoyage selon une direction oblique par rapport à ou sensiblement parallèle à la paroi de protection 11 de manière à nettoyer une portion de surface externe de la paroi de protection 11 en regard de l'objectif 7.

Le jet de nettoyage est un jet de gaz et/ou de liquide et en particulier d'air et/ou d'eau. Le tuyau d'alimentation 59 est agencé pour coopérer avec un raccord d'une conduite d'air comprimé et/ou d'eau sous pression.

Le boitier de protection 5 présente une ouverture de passage 63 pour le tuyau d'alimentation 59 transversalement au plan arrière 15 et selon une direction de connexion de nettoyage 65 transversale au plan arrière 15.

Le tuyau d'alimentation 59 s'étend en dehors du boitier de protection 5 en direction et/ou au-delà du plan arrière 15.

Le dispositif de déviation de jet de nettoyage 61 comprend un élément de coopération 67 pour une extrémité du tuyau d'alimentation 59.

La direction de connexion de nettoyage 65 est sensiblement parallèle à la direction de branchement 51 et/ou la direction d'insertion 17.

Le dispositif de déviation de jet de nettoyage 61 est configuré pour dévier le jet de nettoyage selon un angle sensiblement droit.

Le module caméra 1 comprend en outre un dispositif d'étanchéité 69 configuré pour coopérer avec le boitier de protection 5 et/ou l'objectif 7 de sorte à délimiter une zone étanche 71.

Au moins une partie de l'objectif 7 est compris dans la zone étanche 71, le dispositif d'étanchéité 69 comprenant deux joints 73 à contours fermés sensiblement parallèles et deux montants de liaison 75 configurés pour définir une distance déterminée entre les deux joints 73.

Les deux joints 73 comprennent un premier joint 77 configuré pour coopérer avec la paroi de protection 11 et un deuxième joint 79 configuré pour coopérer avec un épaulement 81 de l'objectif 7.

Le boitier de protection 5 comprend une partie avant 83 agencée pour coopérer avec la paroi de protection 11 et dans laquelle est ménagée le dispositif de déviation de jet de nettoyage 65.

Le premier joint 77 est agencé pour coopérer avec la partie intermédiaire de calage 85 et la paroi de protection 11 de sorte à étanchéifier un contour de contact interne entre la partie intermédiaire de calage 85 et la paroi de protection 11.

Le module caméra 1 comprend une partie intermédiaire de calage 85 agencée pour coopérer avec des deux joints 73 du dispositif d'étanchéité 69 et comprenant une paroi intermédiaire 87 avec deux logements 86 configurés pour recevoir les deux montants de liaison 75.

La partie intermédiaire de calage 85 est agencée pour coopérer avec la partie avant 83 par complémentarité de forme, la paroi intermédiaire 87 s'étendant dans la partie avant 83 de sorte à maintenir le premier joint 77 en position contre la paroi de protection 11.

La prise d'alimentation 49 et/ou l'ouverture de passage 63 sont ménagées dans un épaulement externe 89 du boitier de protection 5. L'épaulement externe 89 est ménagé dans la partie intermédiaire de calage 85. En particulier, l'épaulement externe 89 est disposé entre la paroi de protection 11 et la paroi arrière 13 transversalement au plan arrière 15.

Le boitier de protection 5 comprend une partie arrière 91 comprenant la paroi arrière 13. Le boitier de coopération 5 comprend un ensemble de maintien de la coopération 93 entre la partie avant 83, la partie intermédiaire de calage 85 et la partie arrière 91.

En particulier, l'ensemble de maintien de la coopération 93 comprend au moins une vis agencée pour coopérer avec un filetage managé dans la partie avant 83, la partie arrière 91 et/ou la partie intermédiaire de calage 85.

Comme illustré à la figure 6, un système de surveillance 95 pour véhicule comprend au moins un module caméra 1 et le support de fixation 29 configuré pour coopérer avec l'au moins un module caméra 1.

Le support de fixation 29 comprend une ouverture traversante 97 configurée pour le passage du profilé de guidage 23 en position montée.

Le système de surveillance 95 comprend en outre un dispositif de fixation 99 à un véhicule comme un véhicule routier tel qu'un dispositif de fixation par vissage.

Le système de surveillance 95 comprend un coffret de protection 101 dans lequel est ménagée au moins une ouverture correspondant à l'au moins un module caméra 1 de sorte à ce que l'objectif 7 de l'au moins un module caméra 1 soit en regard de l'ouverture.

Le système de surveillance 95 comprend une pluralité de modules caméras 1 et au moins un support de fixation 29 apte à coopérer avec la pluralité de modules caméras 1.

Chaque objectif 7 de la pluralité de modules caméras 1 présente un axe de vision propre distinct des axes de vision des autres modules caméras 1.

Un véhicule routier peut ainsi comprendre le système de surveillance 95 avec un module caméra 1 configuré pour filmer un angle de vue couvrant une partie cachée par un montant latéral avant du véhicule du point de vue d'un conducteur et au moins un module caméra configuré pour filmer un angle de vue arrière correspondant à un angle de vue d'un rétroviseur latéral et/ou central.

Il est ainsi possible de disposer d'un système modulable en utilisant un ou plusieurs modules caméras 1. En effet, le montage et le démontage d'un module caméra 1 dans un système de surveillance 95 est aisé de par la géométrie du module caméra 1.

Il n'est pas nécessaire d'avoir différents modèles de modules caméras 1 puisque le même peut être utilisé selon plusieurs configurations.

La maintenance est également simplifiée puisqu'il suffit de débrancher le module caméra 1 défectueux et de la remplacer par un autre.

Par ailleurs, le fait que le module caméra 1 dispose d'une zone étanche 71 et d'un système de nettoyage 57 fonctionnant soit avec de l'eau soit avec de l'air permet de standardiser le module caméra à plusieurs véhicules destinés à fonctionner dans des conditions différentes.

## Revendications

1. Module caméra (1) configuré pour coopérer avec un support de fixation (29), le module caméra (1) comprenant :
- un appareil de prise de vues (3) pourvu d'un objectif (7) et d'une prise de raccordement (9) pour la transmission d'images,
- un boitier de protection (5) pourvu d'une paroi de protection (11) disposée en regard de l'objectif (7), et d'une paroi arrière (13) opposée à la paroi de protection (11) et s'étendant sensiblement selon un plan arrière (15),
- un agencement de raccordement (21) configuré pour coopérer avec le support de fixation (29) en une position montée, l'agencement de raccordement (29) comprenant un dispositif de blocage (25) du support de fixation (29) en position montée et un profilé de guidage (23) pour le branchement d'une prise externe sur la prise de raccordement (9), le dispositif de blocage (25) et le profilé de guidage (23) s'étendant au-delà du plan arrière (15) transversalement au plan arrière (15) et en un sens opposé à la paroi de protection (11),
- un système de dégivrage (45) pourvu d'une partie chauffante (47) configurée pour chauffer la paroi de protection (11) et d'une prise d'alimentation (49) ménagée dans ou rapportée sur le boitier de protection (5) de manière à pouvoir coopérer avec une prise d'alimentation complémentaire selon une direction de branchement (51) transversale au plan arrière (15).

2. Module caméra (1) selon la revendication 1, dans lequel, la prise de raccordement (9) est agencée pour coopérer avec la prise externe selon une direction d'insertion (17) parallèle à ou confondue avec une direction d'extension (27) du profilé de guidage (23).

3. Module caméra (1) selon la revendication 2, dans lequel le profilé de guidage (23) s'étend au-delà de la prise de raccordement (9) selon la direction d'extension (27) du profilé de guidage (23) et le sens opposé à la paroi de protection (11).

4. Module caméra (1) selon l'une des revendications 2 ou 3, dans lequel le profilé de guidage (23) comprend une rampe de guidage (43) configurée pour coopérer avec la prise externe selon la direction d'insertion (17).

5. Module caméra (1) selon l'une des revendications 1 à 4, dans lequel la prise d'alimentation complémentaire est configurée pour coopérer avec la prise d'alimentation (49) par translation selon la direction de branchement (51) en se rapprochant de la paroi de protection (11).

6. Module caméra (1) selon l'une des revendications 1 à 5, dans lequel la direction de branchement (51) est sensiblement parallèle à la direction d'insertion (17).

7. Module caméra (1) selon l'une des revendications 1 à 6, comprenant en outre un système de nettoyage (57) pourvu d'un tuyau d'alimentation (59) et d'un dispositif de déviation de jet de nettoyage (61) configuré pour dévier un jet de nettoyage selon une direction oblique par rapport à ou sensiblement parallèle à la paroi de protection (11) de manière à nettoyer une portion de surface externe de la paroi de protection (11) en regard de l'objectif (7).

8. Module caméra (1) selon la revendication 7, dans lequel le boitier de protection (5) présente une ouverture de passage (63) pour le tuyau d'alimentation (59) transversalement au plan arrière (15) et selon une direction de connexion de nettoyage (65) transversale au plan arrière (15).

9. Module caméra (1) selon l'une des revendications 1 à 8, dans lequel le dispositif de blocage (25) comprend trois éléments de fixation amovible (31) présentant chacun une surface de butée (33) configurée pour coopérer avec le support de fixation (29), les surfaces de butée (33) s'étendant selon un même plan dit plan de fixation amovible (35).

10. Module caméra (1) selon l'une des revendications 1 à 9, comprenant en outre un dispositif d'étanchéité (69) configuré pour coopérer avec le boitier de protection (5) et/ou l'objectif (7) de sorte à délimiter une zone étanche (71) dans laquelle est compris au moins une partie de l'objectif (7), le dispositif d'étanchéité (69) comprenant deux joints (73) à contours fermés sensiblement parallèles et deux montants de liaison (75) configurés pour définir une distance déterminée entre les deux joints (75).

11. Module caméra (1) selon la revendication 10, comprenant une partie intermédiaire de calage (85) agencée pour coopérer avec des deux joints (73) du dispositif d'étanchéité (69) et comprenant une paroi intermédiaire (87) avec deux logements (86) configurés pour recevoir les deux montants de liaison (75).

12. Système de surveillance (95) pour véhicule comprenant au moins un module caméra (1) selon l'une des revendications 1 à 11 et le support de fixation (29) configuré pour coopérer avec l'au moins un module caméra (1).

## Patentansprüche

1. Kameramodul (1), das so konfiguriert ist, dass es mit einer Montagehalterung (29) zusammenwirkt, wobei das Kameramodul (1) Folgendes umfasst:
- eine Aufnahmevorrichtung (3), die mit einem Objektiv (7) und einer Anschlussbuchse (9) zum Übertragen von Bildern versehen ist,
- ein Schutzgehäuse (5), das mit einer dem Objektiv (7) zugewandten Schutzwand (11) und einer der Schutzwand (11) gegenüberliegenden Rückwand (13) versehen ist, die sich im Wesentlichen entlang einer hinteren Ebene (15) erstreckt,
- eine Verbindungsanordnung (21), die so konfiguriert ist, dass sie in einer montierten Position mit der Montagehalterung (29) zusammenwirkt, wobei die Verbindungsanordnung (29) eine Blockiervorrichtung (25) der Montagehalterung (29) in der montierten Position und ein Führungsprofil (23) zum Verbinden einer externen Buchse mit der Anschlussbuchse (9) umfasst, wobei sich die Blockiervorrichtung (25) und das Führungsprofil (23) über die hintere Ebene (15) hinaus quer zur hinteren Ebene (15) und in einer Richtung entgegengesetzt zu der Schutzwand (11) erstrecken,
- ein Enteisungssystem (45), das mit einem Heizteil (47), das so konfiguriert ist, dass es die Schutzwand (11) erwärmt, und mit einem Netzanschluss (49) ausgestattet ist, der im Schutzgehäuse (5) vorgesehen oder daran angebracht ist, um das Zusammenwirken mit einem komplementären Netzanschluss in einer Verbindungsrichtung (51) quer zur hinteren Ebene (15) zu ermöglichen.

2. Kameramodul (1) nach Anspruch 1, wobei die Anschlussbuchse (9) so angeordnet ist, dass sie mit der externen Buchse in einer Einsteckrichtung (17) zusammenwirkt, die parallel zu einer Erstreckungsrichtung (27) des Führungsprofils (23) verläuft oder mit dieser zusammenfällt.

3. Kameramodul (1) nach Anspruch 2, wobei sich das Führungsprofil (23) in Erstreckungsrichtung (27) des Führungsprofils (23) und entgegengesetzt zur Schutzwand (11) über die Anschlussbuchse (9) hinaus erstreckt.

4. Kameramodul (1) nach einem der Ansprüche 2 oder 3, wobei das Führungsprofil (23) eine Führungsrampe (43) umfasst, die so konfiguriert ist, dass sie mit der externen Buchse in der Einsteckrichtung (17) zusammenwirkt.

5. Kameramodul (1) nach einem der Ansprüche 1 bis 4, wobei der komplementäre Netzanschluss so konfiguriert ist, dass er mit dem Netzanschluss (49) durch Verschiebung in der Verbindungsrichtung (51) zusammenwirkt, indem er sich der Schutzwand (11) nähert.

6. Kameramodul (1) nach einem der Ansprüche 1 bis 5, wobei die Verbindungsrichtung (51) im Wesentlichen parallel zur Einsteckrichtung (17) verläuft.

7. Kameramodul (1) nach einem der Ansprüche 1 bis 6, ferner umfassend ein Reinigungssystem (57), das mit einem Zufuhrrohr (59) und einer Reinigungsstrahl-Ablenkvorrichtung (61) versehen ist, die so konfiguriert ist, dass sie einen Reinigungsstrahl in einer schrägen Richtung schräg in Bezug auf die Schutzwand (11) oder im Wesentlichen parallel zu dieser ablenkt, um einen Teil einer Außenfläche der Schutzwand (11) zu reinigen, die dem Objektiv (7) zugewandt ist.

8. Kameramodul (1) nach Anspruch 7, wobei das Schutzgehäuse (5) eine Durchgangsöffnung (63) für das Zufuhrrohr (59) quer zur hinteren Ebene (15) und in einer Reinigungsanschlussrichtung (65) quer zur hinteren Ebene (15) aufweist.

9. Kameramodul (1) nach einem der Ansprüche 1 bis 8, wobei die Blockiervorrichtung (25) drei abnehmbare Befestigungselemente (31) umfasst, die jeweils eine Anschlagfläche (33) aufweisen, die so konfiguriert ist, dass sie mit der Montagehalterung (29) zusammenwirkt, wobei sich die Anschlagflächen (33) entlang derselben Ebene erstrecken, die als abnehmbare Befestigungsebene (35) bezeichnet wird.

10. Kameramodul (1) nach einem der Ansprüche 1 bis 9, ferner umfassend eine Dichtungsvorrichtung (69), die so konfiguriert ist, dass sie mit dem Schutzgehäuse (5) und/oder dem Objektiv (7) zusammenwirkt, um eine abgedichtete Zone (71) zu begrenzen, in der sich zumindest ein Teil des Objektivs (7) befindet, wobei die Dichtungsvorrichtung (69) zwei Dichtungen (73) mit im Wesentlichen parallelen geschlossenen Konturen und zwei Verbindungsstege (75) umfasst, die so konfiguriert sind, dass sie einen bestimmten Abstand zwischen den beiden Dichtungen (75) definieren.

11. Kameramodul (1) nach Anspruch 10, das ein Zwischenkeilteil (85), das so angeordnet ist, dass es mit zwei Dichtungen (73) der Dichtungsvorrichtung (69) zusammenwirkt, und eine Zwischenwand (87) mit zwei Aufnahmen (86) umfasst, die so konfiguriert sind, dass sie die beiden Verbindungsstege (75) aufnehmen.

12. Überwachungssystem (95) für ein Fahrzeug, das mindestens ein Kameramodul (1) nach einem der Ansprüche 1 bis 11 und die Montagehalterung (29) umfasst, die so konfiguriert ist, dass sie mit dem mindestens einen Kameramodul (1) zusammenwirkt.

## Claims

1. A camera module (1) configured to cooperate with a mounting bracket (29), the camera module (1) comprising:
- a shooting apparatus (3) provided with a lens (7) and a connection socket (9) for transmitting images,
- a protective housing (5) provided with a protective wall (11) arranged facing the lens (7), and a rear wall (13) opposite the protective wall (11) and extending substantially along a rear plane (15),
- a connection arrangement (21) configured to cooperate with the mounting bracket (29) in a mounted position, the connection arrangement (29) comprising a blocking device (25) of the mounting bracket (29) in the mounted position and a guide profile (23) for connecting an external socket to the connection socket (9), the blocking device (25) and the guide profile (23) extending beyond the rear plane (15) transversely to the rear plane (15) and in a direction opposite to the protective wall (11).
- a defrosting system (45) provided with a heating part (47) configured to heat the protective wall (11) and a power socket (49) formed in or attached to the protective housing (5) so as to be able to cooperate with a complementary power socket in a connection direction (51) transverse to the rear plane (15).

2. The camera module (1) according to claim 1, wherein the connection socket (9) is arranged to cooperate with the external socket in an insertion direction (17) parallel to or coincident with an extension direction (27) of the guide profile (23).

3. The camera module (1) according to claim 2, wherein the guide profile (23) extends beyond the connection socket (9) in the direction of extension (27) of the guide profile (23) and the opposite direction to the protective wall (11).

4. The camera module (1) according to any of claims 2 or 3, wherein the guide profile (23) comprises a guide ramp (43) configured to cooperate with the external socket in the direction of insertion (17).

5. The camera module (1) according to any of claims 1 to 4, wherein the complementary power socket is configured to cooperate with the power socket (49) by translation in the direction of connection (51) by getting closer to the protective wall (11).

6. The camera module (1) according to any of claims 1 to 5, wherein the direction of connection (51) is substantially parallel to the direction of insertion (17).

7. The camera module (1) according to any of claims 1 to 6, further comprising a cleaning system (57) provided with a supply pipe (59) and a cleaning jet deflection device (61) configured to deflect a cleaning jet in an oblique direction with respect to or substantially parallel to the protective wall (11) so as to clean a portion of the outer surface of the protective wall (11) facing the lens (7).

8. The camera module (1) according to claim 7, wherein the protective housing (5) has a passage opening (63) for the supply pipe (59) transverse to the rear plane (15) and in a direction of cleaning connection (65) transverse to the rear plane (15).

9. The camera module (1) according to any of claims 1 to 8, wherein the blocking device (25) comprises three removable fixing elements (31) each having a stop surface (33) configured to cooperate with the fixing support (29), the stop surfaces (33) extending along the same plane called the removable fixing plane (35).

10. The camera module (1) according to any of claims 1 to 9, further comprising a sealing device (69) configured to cooperate with the protective housing (5) and/or the lens (7) so as to delimit a sealed zone (71) in which is comprised at least one part of the lens (7), the sealing device (69) comprising two seals (73) with substantially parallel closed contours and two connecting posts (75) configured to define a determined distance between the two seals (75).

11. The camera module (1) according to claim 10, comprising an intermediate wedging portion (85) arranged to cooperate with two seals (73) of the sealing device (69) and comprising an intermediate wall (87) with two housings (86) configured to receive the two connecting posts (75).

12. A surveillance system (95) for a vehicle comprising at least one camera module (1) according to any of claims 1 to 11 and the mounting bracket (29) configured to cooperate with the at least one camera module (1).
